# EUROPEAN PATENT SPECIFICATION

(11) **EP 2 324 707 B1**
(45) Date of publication and mention of the grant of the patent: **08.08.2018**
(21) Application number: 10191435.6
(22) Date of filing: 16.11.2010
(51) Int. Cl.: A01K 15/02, A61D 9/00

(54) **Rehabilitation and/or training device for equines**
Rehabilitations- bzw Trainingseinrichtung. für Pferde
Dispositif d'entraînement et/ou de réeducation pour chevaux

(30) Priority: 19.11.2009 IT RM20090600
(43) Date of publication of application: 25.05.2011
(73) Proprietor: Casino, Alessandra, 75100 Matera (IT)
(72) Inventor: Casino, Alessandra, I-75100, Matera (IT); Simeone, Emanuele, I-00015, Monterotondo (Roma) (IT)
(74) Representative: Carangelo, Pierluigi

(56) References cited:
- EP-A2- 1 486 114
- WO-A2-2008/132730
- US-B1- 6 551 221

## Description

The present invention refers to a device for rehabilitating and/or training equines, particularly for horses.

In the field of rehabilitation and/or training of equines there is the need to have devices available that allow equines to be rehabilitated and/or trained in an aimed and effective manner. For example, with reference to the field of horse riding or horse racing, it is very important to train the horses in a suitable manner so as to obtain optimal performances for example in a race or in a sport competition, as well as rehabilitating the animal following an injury or disease.

Amongst known types of devices for rehabilitating and/or training equines, and particularly horses, harnesses are widespread comprising reins connected to the belly belt and to the bit of the horse, respectively. Such harnesses however, are quite constrictive due to the fact that they force the horse to shorten and bend its neck so as to bring its nose towards its chest, with consequent negative effects on the agility of the joints and on the muscular tension of the animal.

The European patent application published with number EP 1486114 A2 describes an orthopaedic device for the therapy or training of dogs, animals provided with hooves and camels according to the preamble of claim 1. Such a device comprises a sleeve element intended to be applied irrespectively around a front or back limb of the animal. Moreover, the device comprises an elastic rope having a respective end that is fixedly connected to a ring fixed to the sleeve, and one opposite end that is fixedly connected to a chest harness that is fastened around the chest and back of the animal. Specifically, the ring to which one of the ends of the elastic rope is fixedly connected is fixed on a front part of the sleeve so as to be integral with it.

One purpose of the present invention is to promote the rehabilitation and/or training of an equine, in particular re-educating and/or training the movement of the front limb and more in particular the movement of the shoulder, but without forcing the animal to take up incorrect postures or perform incorrect habitual movements, and without overloading the limbs of the equine. It is known that overloading or incorrect postures can lead to tearing, inflammation or pain in the equine.

From another point of view, the invention has the objective of improving the quality of the pace of the equine, optimizing joint excursion of the joints of the forelimbs. It is also desirable to optimise the "start up" time of the joint movement, i.e. the natural muscular acceleration step necessary to "start" the muscular movement.

These and other purposes and advantages, which shall be made clearer in the rest of the description, are achieved according to the invention with a device for rehabilitating and/or training equines as defined in claim 1 in its most general form and in the dependent claims in some particular embodiments.

We shall now describe some preferred non limiting embodiments of the invention; we refer to the attached drawings, in which:
- fig. 1 is a perspective almost side view of a first embodiment of the invention applied to a front limb of a horse, in particular to the shin of such a limb;
- fig. 2 is a perspective almost side view of a second embodiment of the invention applied to a front limb of a horse, in particular to the shin of such a limb; and
- fig. 3 is a substantially front view of the embodiment of fig. 2;
- fig. 4 is a perspective almost front view of a third embodiment of the invention applied to a front limb of a horse, in particular to the shin of such a limb;
- fig. 5 is a substantially partial side view of a horse, in which the embodiment of figure 4 is visible. In the attached figures same or similar elements shall be indicated with the same reference numerals.

With reference to the attached figures, reference numeral 10 indicates a sleeve element that is suitable for being applied in a removable and stable manner around the shin of a front limb of an equine, i.e. around one of the two limbs that are closer to the head of the equine.

In the example, the equine is in particular a horse and the sleeve element advantageously wraps around a considerable portion of the shin. In other words, in the example, the sleeve element wraps a considerable portion of the front limb that is comprised between the carpus and the fetlock. In its general configuration, the sleeve element 10 is preferably compared to that of a conventional shin-guard of the type used to cover and protect the shin of a horse. Yet more in general, in all of the present description and in the claims, with the expression "sleeve element" or "sleeve" we mean an element directly having a substantially sleeve-like configuration or an element suitable for substantially taking up the form of a sleeve to be used around the shin of an equine. For example, the sleeve element could be suitable for substantially taking up the form of a plate when it is not applied to the shin of an equine, to substantially take up, on the other hand, the form of a sleeve when it is applied to the front limb of the equine so as to partially or completely wrap around the shin. The task of the sleeve is to form a support for one or more constraint points or stable constraint elements, on the limb of the horse, to which the end portions or the ends of one or more elastically extensible ropes can be fixed, the other end portion of which or other end can be fixed to another constraint means that is fixed or fixable on a support element that is suitable to be applied to another part of the horse, for example on the same limb of the horse to which the sleeve element is applied.

It is preferable for the sleeve to be able to completely wrap around the limb surrounding it, both at the front and at the back, and in any case equipped with straps or strips of Velcro® (or micro-hooks) or elastic strips or other means to stably fasten it to the limb of the horse. Internally, it is worth providing a padding (not illustrated) which makes the sleeve adherent with respect to the limb, causing a friction that substantially prevents the sleeve from vertically sliding along the limb or rotating around it. An internal padding of the transpiring type is particularly preferred.

In all of the present description and in the claims the terms and expressions indicating positions and directions, such as for example "vertical", "upper", "lower", "front" and "back" refer to the condition fitted to a horse resting its hooves on the ground. In the same way, the words "outer" and "inner" are meant with reference to the centre of the body of the horse. The sleeve 10 can include one or more strengthening elements in the form of semi-rigid shells (not illustrated), for example one at the back and one at the front, used for evenly distributing the tensions in the sleeve. This can comprise an elastic material, for example an outer coating of neoprene or Velcro prene, that is adhesive to the micro-hooks of Velcro. Other different materials can be used for the manufacture of the sleeve: it is possible, in general, to use many semi-rigid materials, such as leather. Inserts with the function of a stiffening shell for the back (and/or front) part of the sleeve can be made for example with plastic materials, or composite materials such as resin with carbon fibre. Further semi-rigid inserts can be included along the side areas of the sleeve.

The sleeve can irrespectively be shaped in a way such as to cover or leave the fetlock uncovered; it is however preferable for it to allow wide mobility of the fetlock region, without interfering with its movements.

As a further provision, to prevent the sleeve from sliding on the limb, a polo bandage can be directly applied onto the limb itself.

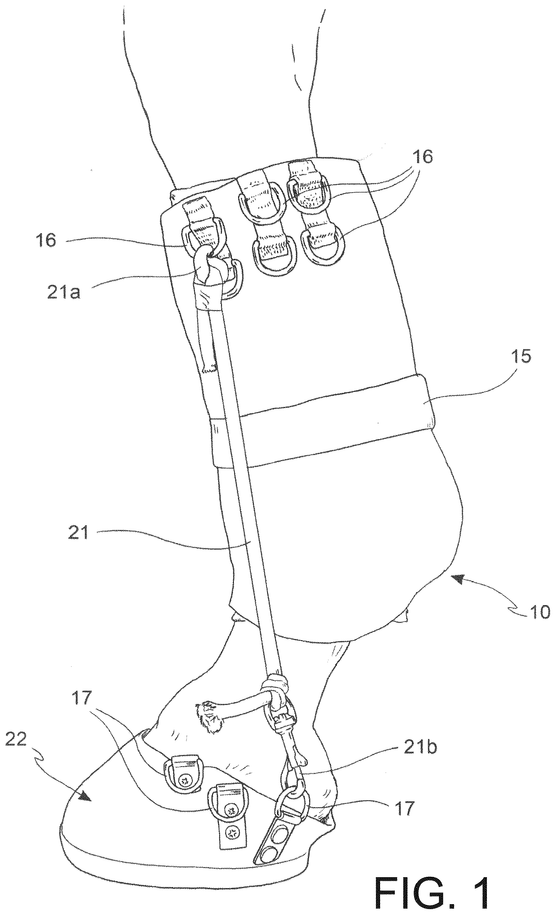

Fig. 1 illustrates one embodiment of the invention, having the purpose of facilitating the extension of the fetlock. The sleeve 10 is connected by means of two elastically extensible side ropes 21, or training/rehabilitation ropes 21 (only one of which is visible in fig. 1), to a boot 22 positioned on the hoof of the same limb of the horse on which the sleeve 10 is applied. In the top part of the sleeve, on both the outer and the inner sides, a respective plurality of rings 16 or other first constraint means is fixed or fixable, to which a first end portion or a first end 21a of one of the two elastic ropes 21 can be selectively constrained. A second end portion or a second end 21b of such a rope is fastened or hooked, or fixedly connected in another way to one of a series of rings 17 or of other second constraint means that are fixed or fixable onto the corresponding, outer or inner, side of the boot 22. In other words according to such an embodiment, a device according to the invention comprises at least one ring 17 on a specific side of the boot 22 and at least one other ring 17 on another side of the boot substantially opposite said specific side. Such two rings 17 are in particular suitable for being connected, through two respective elastically extensible ropes 21, to two respective rings 16 situated on two substantially opposite sides of the sleeve element 10. The rings 16 on the sleeve and those 17 on the boot are advantageously arranged at different positions respectively in terms of height and/or in the anterior-posterior direction so as to be able to select the optimal arrangement of the elastic ropes 21 according to the specific structure of the limb of the horse and/or of the specific training and/or rehabilitation requirements. Moreover, thanks to such a provision, it is possible to vary the inclination of the ropes 21 so as to adjust the training/rehabilitation effect of the device. Indeed, by varying the inclination of the ropes 21 it is possible to act, depending on circumstances, mainly on the flexing or mainly on the extension of the fetlock.

The use of two elastic side ropes, according to an arrangement of substantially vertical symmetry, ensures that the involved joints essentially work on a correct vertical alignment and avoids unexpected twisting or unnatural movements that are harmful for the joints and the ligaments. In the operation, the elastic ropes reach their maximum tension at the end of the step of resting the hoof on the ground; in order to gain the maximum benefit from the device, it is necessary that in such a step, the upper constraint point of the elastic ropes (on the sleeve) relatively moves forwards with respect to the lower fixing point (on the boot); it is for this reason that it is preferred to arrange the side rings 16 on the top part of the sleeve. Advantageously, the rings 16 can be partially or completely covered by a fastening means such as a fastening band (not represented in figure 1 so as to make the rings 16 visible) analogous to the band 15, so as to fixedly connect in a more stable manner each rope 21 to the respective ring 16.

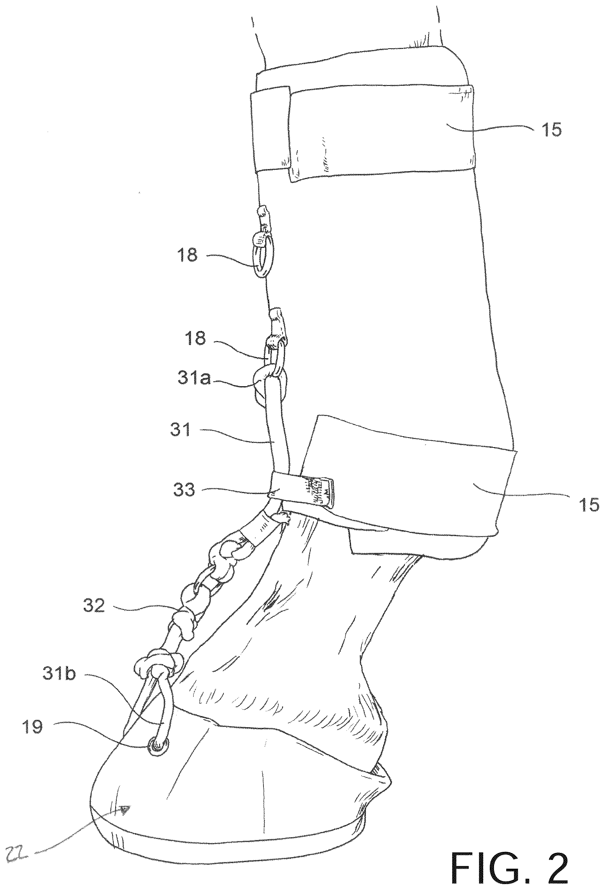

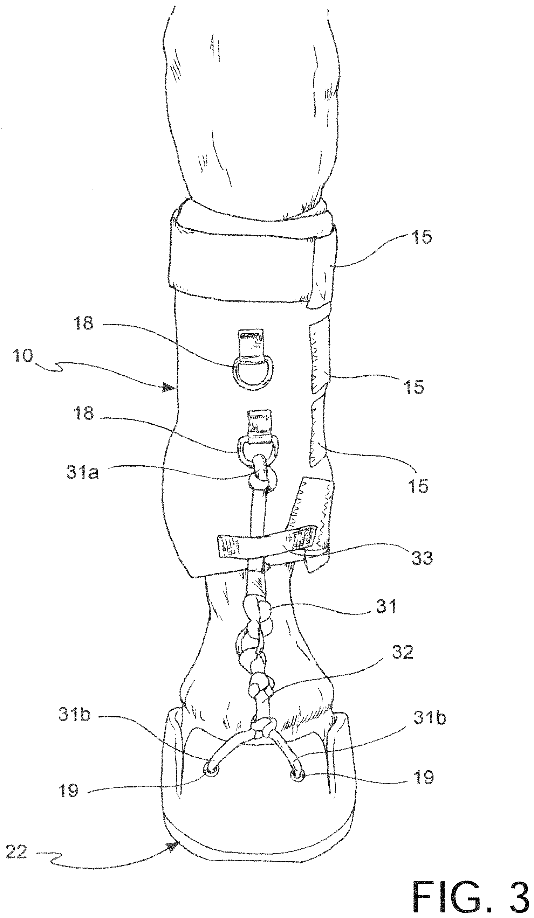

In figures 2 and 3 a further embodiment of the invention is illustrated, having the purpose of facilitating the extension of the fetlock. In the example, the sleeve 10 is connected to the boot 22 by means of a front elastic rope 31, or training/rehabilitation rope 31, the first end portion or the upper end 31a of which is fixedly connected to a ring 18 or to at least one other first constraint means on the front part of the sleeve, whereas at the bottom the rope splits with a second and a third end portion or with two ends 31b constrained in two respective holes 19 or other second constraint means provided in the front part of the boot. It is preferable for there to be a plurality of rings 18 fixed at different heights along the front side of the sleeve, so as to be able to select the optimal position of the elastic rope 31 according to the specific structure of the limb of the horse and/or to the specific training or rehabilitation requirements. It is also preferable (fig. 3) for the elastic rope to be fixedly connected to the boot in two points that are laterally spaced and substantially symmetric with respect to an ideal vertical plane passing by the centre of the boot. In the example illustrated, the elastic rope 31 is indirectly fixedly connected to the boot through a further fastening means 32, according to an inverted "Y" configuration. This symmetrical arrangement is used for: equally distributing the elastic force on the foot; making the joints work in a natural alignment; avoiding unexpected artificial movements to the detriment of the joints and of the collateral ligaments. Near to the lower and front edge of the sleeve a loop 33 is provided that keeps the elastic rope 31 in axis with the joints of the horse. According to the embodiment of figures 2 and 3, the elastic rope 31 reaches its own maximum tension during the flexing of the fetlock, in the step in which the lower fixing point of the elastic rope moves backwards.

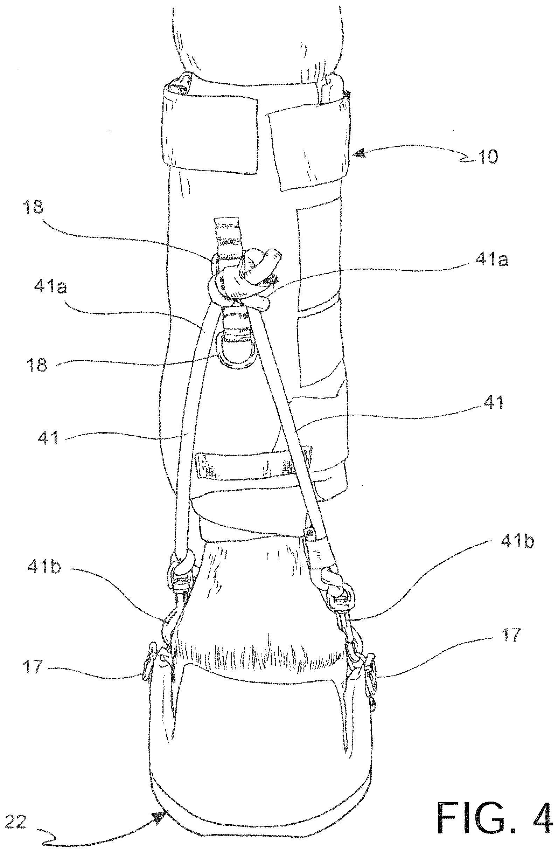

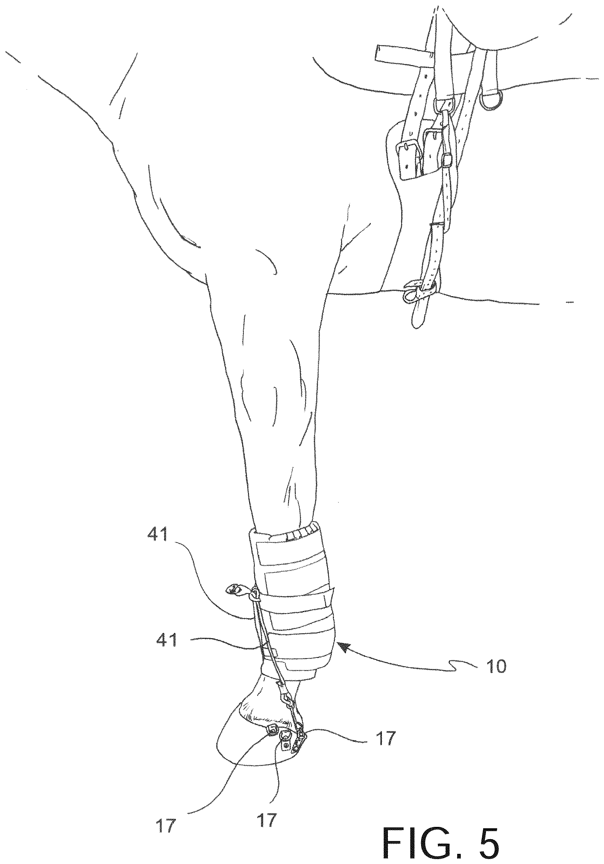

Alternatively to the configuration of figures 2 and 3, according to a further variant (not illustrated), it is possible to fixedly connect the lower end of the elastic rope 31 in a single front hole 19 or other second constraint means of the boot 22, preferably arranged in a central position on the front part of the boot. Figures 4 and 5 illustrate a further embodiment of the invention having the purpose of facilitating the extension of the fetlock. In the example, the sleeve 10 is connected to the boot 22 by means of two elastically extensible ropes 41, or training/rehabilitation ropes 41, that mainly extend along the front side of the sleeve. Each of the elastic ropes 41 has a first end portion or the upper end 41a constrained to a ring 18 or to at least one other first constraint means fixed or fixable on the front part of the sleeve. More in particular, the two elastic ropes 41 have the respective upper ends 41a fixedly connected to one same ring 18. Moreover, each of the two elastic ropes 41 has a second end portion or lower end 41b that is fixedly connected to one of the rings 17 or other second constraint means that is fixed or fixable to the shoe 22. Specifically, one of the two elastic ropes 41 has the respective lower end 41b fixedly connected to a ring 17 situated on a specific side of the boot 22 whereas the other elastic rope 46 has the respective lower end 41b fixedly connected to a ring 17 situated on another side of the boot 22 substantially opposite to said specific side. It is preferable for there to be a plurality of rings 18 that are fixed or fixable at different heights along the front side of the sleeve, so as to be able to select the optimal position of the elastic ropes 41, based upon the specific structure of the limb of the horse and/or upon the specific training and/or rehabilitation requirements.

In relation to the embodiments of the invention that are based upon the use of a sleeve element and a boot connected to one another in various ways through one or more elastically extensible ropes, it is very important to underline that such embodiments, in general facilitating the flexing-extension of the fetlock, in reality have a surprising effect on the overall mobility of the entire front limb of the equine, defining in particular a gradual increase of the shoulder joint excursion.

Indeed in order to obtain a balanced distribution of the stress of the muscular and joint structures of the right part and of the left part of the horse, so as to obtain optimal results, it is in general preferable to simultaneously use two training and/or rehabilitation devices according to the invention, in particular each associated with a respective front limb of the horse. Of course this applies to the other embodiments of a device according to the invention described above in the present description.

The movement of the shoulder of the horse is very important in the biomechanics of the horse; the shoulders, have both a transduction action of the movement and a propulsion action; indeed, they receive the thrust of the hindlegs, transmitted by means of the mobility of the spinal column, and give it back in an upwards and forwards movement, adding its own propulsive thrust component. The tests carried out by the Applicant have highlighted surprising results under two aspects:
a.)widening of the joint excursion range;
b.)decrease in the muscular activation time.

It can be understood straight away that by increasing the excursion capability of the shoulder, the horse will have more chance of optimising the movement during physical activity. It is important to note that, for the same joint excursion, it is the acceleration of the initial start up that allows the horse to collect the propulsion and push in the most economical and functional way possible; the initial acceleration of the movement of the shoulder is fundamental in order to optimise the results.

The device of the invention, indeed, does not substantially contrast the movement. The device is based upon the concept of making the joint movement easier and faster; in other words, the horse is facilitated in carrying out movements and the device will cause a greater flexing of the shoulder, corresponding to a greater extension of the carpus, of the fetlock and of the foot.

It is worth underlining that in all the embodiments of the invention described here, in order to obtain optimal results, the position and the length of the elastic ropes is selected based upon the configuration of the horse and/or based upon the training/rehabilitation objectives that the horse can achieve. Moreover, especially in the case in which the elastic ropes are indirectly fixed, for example through the interposition of substantially non elastic ropes, to the constraint means provided on the sleeve, it is important to preserve a degree of elasticity that is functional for the horse that allows it to move in the most relaxed and natural way possible. A serious mistake would indeed be that of using elastic ropes that are so short that they are excessively stretched.

It should be understood that the invention is not limited to the embodiments described and illustrated thus far, which should be considered examples of embodiments of the rehabilitation and/or training device. For example, the constraint means illustrated in the form of rings 16, 17, 18 can alternatively be made as holes or other hooking elements that are mechanically equivalent to fasten the elastic ropes. More in general, the invention can undergo modifications relative to shapes and arrangements of parts, constructive details and of operation, according to the possible variants that shall be considered suitable to men skilled in the art, and that should be considered covered by the invention, as defined by the following claims.

## Claims

1. Device for rehabilitating and/or training equines, comprising:
- a sleeve element (10) suitable to be applied in a removable and stable manner around an equine shin;
- a first constraint means (16, 18) fixed to the sleeve element (10);
- a second constraint means (17, 19) distant from the first; and
- at least one elastically extensible rope (21, 31, 41) having a first end portion (21a, 31a, 41a) connected to the first constraint means (16, 18) and a second end portion (21b, 31b, 41b) fixed to the second constraint means (17, 19);
said device being **characterized in that** comprises a boot (22) suitable to be positioned on the hoof of the same limb on which the sleeve element (10) is applied, the second constraint means (17, 19) being fixed to said boot (22).

2. Device according to claim 1, **characterised in that** it comprises a plurality of elastically extensible ropes (21), a plurality of said first constraint means (16) and a plurality of said second constraint means (17), of which at least one second constraint means (17) on a specific side of the boot (22) and at least one other second constraint means (17) on another side of the boot (22) substantially opposite to said specific side; said two second constraint means (17) being suitable for being connected, through two respective elastically extensible ropes (21), to two respective first constraint means (16) located on two substantially opposite sides of the sleeve element (10).

3. Device according to claim 2, **characterised in that** on two substantially opposite sides of the sleeve element (10), two groups of said first constraint means (16) are fixed, arranged at different positions in terms of height and/or in the anterior-posterior direction.

4. Device according to claim 1, **characterised in that** the first constraint means (18) is fixed on a front side of the sleeve element (10) and the second constraint means (19) is located in a front part of the boot (22).

5. Device according to claim 4, **characterised in that** it comprises a plurality of said second constraint means (19), the elastically extensible rope (31) being connected, directly or indirectly, to two of said second constraint means (19) located at a front part of the boot (22) and arranged symmetrically with respect to an ideal vertical plane passing through the centre of the same boot.

6. Device according to claim 1, **characterised in that** the first constraint means (18) is fixed on a front side of the sleeve element (10) and **in that** said device comprises a plurality of elastically extensible ropes (41) and a plurality of said second constraint means (17), of which at least one second constraint means (17) on a specific side of the boot (22) and at least one other second constraint means (17) on another side of the boot substantially opposite to said specific side; said two second constraint means (17) being connected, through two respective elastically extensible ropes (41), to said first constraint means (18).

7. Device according to any one of claims 4 to 6, **characterised in that** it comprises a plurality of said first constraint means (18) fixed onto a front side of the sleeve element (10) and arranged at different positions in terms of height.

## Patentansprüche

1. Vorrichtung zum Rehabilitieren und/oder Trainieren von Einhufern, die folgende Merkmale aufweist:
- ein Hüllenelement (10), das geeignet ist, um in einer entfernbaren und stabilen Weise um das Schienbein eines Einhufers angelegt zu werden;
- eine erste Begrenzungseinrichtung (16, 18), die an dem Hüllenelement (10) fixiert ist;
- eine zweite Begrenzungseinrichtung (17, 19), die von der ersten entfernt ist; und
- zumindest ein elastisch dehnbares Seil (21, 31, 41) mit einem ersten Endabschnitt (21a, 31a, 41a), der mit der ersten Begrenzungseinrichtung (16, 18) verbunden ist, und einem zweiten Endabschnitt (21b, 31b, 41b), der an der zweiten Begrenzungseinrichtung (17, 19) fixiert ist;
wobei die Vorrichtung **dadurch gekennzeichnet ist, dass** sie einen Schuh (22) aufweist, der geeignet ist, um an dem Huf der gleichen Gliedmaße positioniert zu sein, an die das Hüllenelement (10) angelegt ist, wobei die zweite Begrenzungseinrichtung (17, 19) an dem Schuh (22) fixiert ist.

2. Vorrichtung gemäß Anspruch 1, die **dadurch gekennzeichnet ist, dass** sie eine Mehrzahl elastisch dehnbarer Seile (21), eine Mehrzahl der ersten Begrenzungseinrichtungen (16) und eine Mehrzahl der zweiten Begrenzungseinrichtungen (17) aufweist, davon zumindest eine zweite Begrenzungseinrichtung (17) an einer spezifischen Seite des Schuhs (22) und zumindest eine weitere zweite Begrenzungseinrichtung (17) an einer anderen Seite des Schuhs (22), die der spezifischen Seite im Wesentlichen gegenüberliegt; wobei die beiden zweiten Begrenzungseinrichtungen (17) geeignet zur Verbindung, durch zwei jeweilige elastisch dehnbare Seile (21), mit zwei entsprechenden ersten Begrenzungseinrichtungen (16) sind, die sich an zwei im Wesentlichen gegenüberliegenden Seiten des Hüllenelements (10) befinden.

3. Vorrichtung gemäß Anspruch 2, die **dadurch gekennzeichnet ist, dass** an zwei im Wesentlichen gegenüberliegenden Seiten des Hüllenelements (10) zwei Gruppen der ersten Begrenzungseinrichtung (16) fixiert sind, angeordnet an unterschiedlichen Positionen im Hinblick auf die Höhe und/oder in der Anterior-Posterior-Richtung.

4. Vorrichtung gemäß Anspruch 1, die **dadurch gekennzeichnet ist, dass** die erste Begrenzungseinrichtung (18) an einer Vorderseite des Hüllenelements (10) fixiert ist und sich die zweite Begrenzungseinrichtung (19) an einem Vorderteil des Schuhs (22) befindet.

5. Vorrichtung gemäß Anspruch 4, die **dadurch gekennzeichnet ist, dass** sie eine Mehrzahl der zweiten Begrenzungseinrichtungen (19) aufweist, wobei das elastisch dehnbare Seil (31) direkt oder indirekt mit zweien der zweiten Begrenzungseinrichtungen (19) verbunden ist, die sich an einem Vorderteil des Schuhs (22) befinden und symmetrisch in Bezug auf eine ideale vertikale Ebene angeordnet sind, die durch die Mitte des gleichen Schuhs verläuft.

6. Vorrichtung gemäß Anspruch 1, die **dadurch gekennzeichnet ist, dass** die erste Begrenzungseinrichtung (18) an einer Vorderseite des Hüllenelements (10) fixiert ist, und dadurch, dass die Vorrichtung eine Mehrzahl elastisch dehnbarer Seile (41) und eine Mehrzahl der zweiten Begrenzungseinrichtungen (17) aufweist, davon zumindest eine zweite Begrenzungseinrichtung (17) an einer spezifischen Seite des Schuhs (22) und zumindest eine weitere zweite Begrenzungseinrichtung (17) an einer anderen Seite des Schuhs, wie der spezifischen Seite im Wesentlichen gegenüberliegt;
wobei die beiden zweiten Begrenzungseinrichtungen (17) durch zwei jeweilige elastisch dehnbare Seile (41) mit der ersten Begrenzungseinrichtung (18) verbunden sind.

7. Vorrichtung gemäß einem der Ansprüche 4 bis 6, die **dadurch gekennzeichnet ist, dass** sie eine Mehrzahl der ersten Begrenzungseinrichtungen (18) aufweist, die an einer Vorderseite des Hüllenelements (10) fixiert und an unterschiedlichen Positionen im Hinblick auf die Höhe angeordnet sind.

## Revendications

1. Dispositif de rééducation et/ou d'entraînement pour chevaux, comprenant :
un élément formant manchon (10) adapté pour être appliqué de manière amovible et stable autour d'un tibia de cheval ;
des premiers moyens de retenue (16, 18) fixés à l'élément formant manchon (10) ;
des seconds moyens de retenue (17, 19) distants des premiers ; et
au moins une corde élastiquement extensible (21, 31, 41) ayant une première partie d'extrémité (21a, 31a, 41a) reliée aux premiers moyens de retenue (16, 18) et une seconde partie d'extrémité (21b, 31b, 41b) fixée aux seconds moyens de retenue (17, 19) ;
ledit dispositif étant **caractérisé en ce qu'**il comprend une botte (22) adaptée pour être positionnée sur le sabot du même membre que celui sur lequel est appliqué l'élément formant manchon (10), les seconds moyens de retenue (17, 19) étant fixés à ladite botte (22).

2. Dispositif selon la revendication 1, **caractérisé en ce qu'**il comprend une pluralité de cordes élastiquement extensibles (21), une pluralité desdits premiers moyens de retenue (16) et une pluralité desdits seconds moyens de retenue (17), dont au moins un ensemble de seconds moyens de retenue (17) sur un côté spécifique de la botte (22) et au moins un autre ensemble de seconds moyens de retenue (17) sur un autre côté de la botte (22) sensiblement opposé audit côté spécifique ; lesdits deux ensembles de seconds moyens de retenue (17) étant adaptés pour être reliés, par le biais de deux cordes élastiquement extensibles (21) respectives, à deux ensembles de premiers moyens de retenue (16) respectifs situés sur deux côtés sensiblement opposés de l'élément formant manchon (10).

3. Dispositif selon la revendication 2, **caractérisé en ce que**, sur deux côtés sensiblement opposés de l'élément formant manchon (10), deux groupes desdits premiers moyens de retenue (16) sont fixés, agencés en différentes positions en termes de hauteur et/ou dans la direction antéropostérieure.

4. Dispositif selon la revendication 1, **caractérisé en ce que** les premiers moyens de retenue (18) sont fixés sur un côté avant de l'élément formant manchon (10) et les seconds moyens de retenue (19) sont situés dans une partie avant de la botte (22).

5. Dispositif selon la revendication 4, **caractérisé en ce qu'**il comprend une pluralité desdits seconds moyens de retenue (19), la corde élastiquement extensible (31) étant reliée, directement ou indirectement, à deux ensembles desdits seconds moyens de retenue (19) situés au niveau d'une partie avant de la botte (22) et agencés symétriquement par rapport à un plan vertical idéal passant à travers le centre de la même botte.

6. Dispositif selon la revendication 1, **caractérisé en ce que** les premiers moyens de retenue (18) sont fixés sur un côté avant de l'élément formant manchon (10) et **en ce que** ledit dispositif comprend une pluralité de cordes élastiquement extensibles (41) et une pluralité desdits seconds moyens de retenue (17), dont au moins un ensemble de seconds moyens de retenue (17) sur un côté spécifique de la botte (22) et au moins un autre ensemble de seconds moyens de retenue (17) sur un autre côté de la botte sensiblement opposé audit côté spécifique ; lesdits deux ensembles de seconds moyens de retenue (17) étant reliés, par le biais de deux cordes élastiquement extensibles (41) respectives, auxdits premiers moyens de retenue (18).

7. Dispositif selon l'une quelconque des revendications 4 à 6, **caractérisé en ce qu'**il comprend une pluralité desdits premiers moyens de retenue (18) fixés sur un côté avant de l'élément formant manchon (10) et agencés en différentes positions en termes de hauteur.
